# EUROPÄISCHE PATENTANMELDUNG

(11) **EP 0 569 990 A1**
(43) Veröffentlichungstag der Anmeldung: **18.11.1993**
(21) Anmeldenummer: 93107831.5
(22) Anmeldetag: 13.05.1993
(51) Int. Cl.: F16P 3/14

(54) **Vorrichtung zur automatischen Bewegungsabschaltung bei Hebebühnen**

(30) Priorität: 14.05.1992 DE 4215891
(71) Anmelder: Banss Maschinenfabrik GmbH & Co. KG, D-35216 Biedenkopf (DE)
(72) Erfinder: Weigel, Wilfried, W-3563 Dautphetal-Friedensdorf (DE); Runzheimer, Bernd, W-3568 Gladenbach 12 (DE)
(74) Vertreter: Klunker . Schmitt-Nilson . Hirsch

(57) **Zusammenfassung**

Vorrichtung zur automatischen Bewegungsabschaltung einer bewegten Einrichtung (Bewegungseinrichtung), insbesondere einer auf und ab bewegbaren Plattform einer Hebebühne (10) in einem Schlachthof, mit
- einer unterhalb einer Hebebühnenplattform (11) installierten, vorzugsweise als Bewegungsmelder ausgebildeten berührungslosen Sensoreinrichtung (23);
- einer den Erfassungsbereich der Sensoreinrichtung (23) begrenzenden Abschirmung (17); wobei die Abschirmung (17) den Erfassungsbereich der Sensoreinrichtung (23) auf einen nach unten offenen Raum (Sicherheitsraum 18) unterhalb der Hebebühnenplattform (11) begrenzt, und die Sensoreinrichtung (23) den Sicherheitsraum (18) mit zumindest einem Taststrahl (25) durchstreift.

## Beschreibung

Die Erfindung betrifft eine Vorrichtung zur automatischen Bewegungsabschaltung einer bewegten Einrichtung (Bewegungseinrichtung), insbesondere einer auf und ab bewegbaren Plattform einer Hebebühne in einem Schlachthof.

Zum sicheren Betrieb von Hebebühnen, wie sie etwa bei der Schlachtung von Rindern und Schweinen in einem Schlachthof Verwendung finden, ist es erforderlich, daß diese mit einer zumindest die Absenkbewegung der Hebebühnenplattform abstoppenden automatischen Abschaltvorrichtung versehen sind, damit während der Absenkbewegung der Hebebühnenplattform möglicherweise unter dieser befindliche Personen nicht verletzt werden können.

Bisher hat man diesem Erfordernis dadurch Rechnung getragen, daß die Bedienung der Hebebühnenplattform nur direkt von der Hebebühne aus durch die die Hebebühne benutzende Person möglich war. Dabei war die Absenkbewegung der Hebebühne nur so lange durchführbar, wie die Bedienperson einen entsprechenden Bedienhebel betätigte.

Der Nachteil dieser sicherheitstechnischen Lösung besteht darin, daß der Aufenthalt einer weiteren Person im Hebebühnenbereich, etwa unterhalb dieser, ohne Einfluß auf die Absenkbewegung der Hebebühne ist, und diese Person daher durch die sich absenkende Hebebühnenplattform verletzt werden kann.

Es sind verschiedene technische Standardlösungen bekannt, die in Abhängigkeit von dem Betreten eines Bewegungsbereichs der Bewegungseinrichtung durch eine Person ein automatisches Abstoppen der Bewegungseinrichtung zur Folge haben. Eine bekannte Standardlösung besteht darin, sogenannte Schaltmatten im Bewegungsbereich der Bewegungseinrichtung anzuordnen, die bei Betreten einen elektrischen Schaltkontakt auslösen. Ebenfalls bekannt sind berührungslose Sensoreinrichtungen, wie Lichtschrankensysteme oder auch Bewegungsmelder, die etwa mit einem optischen (Infrarot-Bewegungsmelder) oder akustischen (Ultraschall-Bewegungsmelder) Signal arbeiten.

Insbesondere bei der Verwendung derartiger Sensoreinrichtungen, wie Schaltmatten oder den genannten berührungslos arbeitenden Sensoreinrichtungen, ergeben sich im Schlachthofbereich besondere Probleme. Zum einen dürfen durch die Sensoreinrichtungen die für einen Schlachthof erforderlichen Hygienebedingungen nicht beeinträchtigt werden. Dies steht etwa der Verwendung von auf dem Schlachthofboden anzuordnenden Schaltmatten, die die Reinigung des Bodens beeinträchtigen, entgegen. Zum anderen ergeben sich hinsichtlich der Verwendung berührungslos arbeitender Sensoreinrichtungen Probleme wegen der beim Schlachtvorgang zumindest zeitweise auftretenden Verunreinigungen der Schlachttierumgebung, etwa durch Schlachttierblut oder am Schlachttierkörper haftenden Schmutz. Daher wird es bislang möglichst vermieden, im Schlachthofbereich berührungslos arbeitende Sensoreinrichtungen einzusetzen.

Darüber hinaus besteht insbesondere bei der Großtierschlachtung das Problem, daß die Schlachttierkörper während des Schlachtvorgangs an der Hebebühnenplattform vorbeibewegt werden und dabei Schlachttierkörperteile, wie etwa die Vorderbeine eines Rinderkörpers, in den Bereich unterhalb der Hebebühnenplattform eintreten und somit das Abstoppen einer Absenkbewegung der Hebebühnenplattform verursachen könnten, selbst wenn dieses nicht erwünscht ist.

Der vorliegenden Erfindung liegt die Aufgabe zugrunde, den Einsatz einer berührungslosen Sensoreinrichtung zum Abstoppen einer Absenkbewegung einer Hebebühnenplattform zu ermöglichen, ohne daß deren Funktion durch Verschmutzungen beeinträchtigbar ist und ohne daß der normale Betriebsablauf der Hebebühne beim Schlachtvorgang beeinträchtigt wird.

Diese Aufgabe wird durch die Merkmale des Anspruchs 1 gelöst.

Die der Erfindung zugrunde liegende Idee besteht darin, eine berührungslose Sensoreinrichtung derart unterhalb einer Hebebühnenplattform innerhalb einer Abschirmung anzuordnen, daß ein von der Sensoreinrichtung emittierter Taststrahl nur den für die Sicherheit von Personen, die sich unterhalb der Hebebühnenplattform befinden, relevanten Raum durchstreift. Hierdurch wird der Erfassungsbereich der Sensoreinrichtung abgeschirmt von Vorgängen, die sich außerhalb des sicherheitsrelevanten Raums befinden, so daß etwa die Vorderbeine eines Rinderkörpers, die unterhalb der Hebebühnenplattform längs der Hebebühne bewegt werden, nicht erfaßt werden und somit kein unerwünschtes Abstoppen die Folge sein kann.

Dem entgegen wird das Eintreten von Personen oder deren Körperteilen in den durch die Abschirmung begrenzten sicherheitsrelevanten Raum von der Sensoreinrichtung detektiert, so daß ein Abstoppen der Absenkbewegung die Folge ist.

Neben der räumlichen Begrenzung des Erfassungsbereichs der Sensoreinrichtung sorgt die Abschirmung dafür, daß ausgehend von den vorbeigeförderten Schlachttierkörpern keine Verunreinigung zur Sensoreinrichtung gelangen kann, die deren Funktion beeinträchtigen könnte.

Die erfindungsgemäße Vorrichtung ermöglicht sowohl den Einsatz von Sensoreinrichtungen, die nach dem Reflexionsprinzip arbeiten, wie etwa einer Lichtschranke mit einem schwenkenden, von der Abschirmung reflektierten Lichtstrahl, oder auch den Einsatz echter Bewegungsmelder, die nur auf sich verändernde Positionierungen von Gegenständen oder Personen reagieren, wie etwa Infrarot-Bewegungsmelder, die Winkeldifferenzen der Reflexionsstrahlung erfassen, oder Ultraschall-Bewegungsmelder, die etwa nach dem Doppler-Prinzip arbeiten.

Unabhängig von dem Funktionsprinzip erweist es sich in jedem Fall als wesentlich, daß der Erfassungsbereich gegen unerwünschte äußere Einflüsse durch eine Abschirmung abgeschirmt ist.

Bei einer bevorzugten Ausführungsform der erfindungsgemäßen Vorrichtung ist die Abschirmung durch eine längs dem Umfangsrand der Hebebühnenplattform umlaufende Stegwandung gebildet, wobei die Sensoreinrichtung an einer Seite der Stegwandung innenliegend angeordnet ist.

Die als Stegwandung ausgebildete Abschirmung bildet somit quasi zusammen mit der Sensoreinrichtung eine Nachrüsteinheit, die besonders einfach und kostengünstig an bestehende Hebebühnenplattformen installiert werden kann.

Bei einer vorteilhaften Ausführungsform der Vorrichtung ist die Sensoreinrichtung gegenüberliegend derjenigen Stegwandungsseite angeordnet, längs derer Schlachttierkörper oder Schlachttierkörperteile vorbeigefördert werden. Durch diese Anordnung der Sensoreinrichtung ist diese zum einen vor etwaigen Beschädigungen durch den Schlachttierkörper oder die Schlachttierkörperteile geschützt, zum anderen ist zur Durchstreifung des durch die Abschirmung gebildeten Sicherheitsraumes unterhalb der Hebebühnenplattform lediglich ein Schwenkwinkel von 180° für den Taststrahl erforderlich.

Um Verletzungen von Personen durch die Abschirmung selbst auszuschließen, ist es möglich, die Stegwandung nachgiebig auszubilden. Infolge der Nachgiebigkeit der Stegwandung gelangt eine die Stegwandung berührende Person bei Fortdauer der Absenkbewegung der Hebebühnenplattform automatisch in den Erfassungsbereich des Taststrahls der Sensoreinrichtung, so daß auch in diesem Fall schließlich ein Abstoppen der Absenkbewegung die Folge ist.

Darüber hinaus besteht jedoch auch die Möglichkeit, die Stegwandung starr auszubilden und mit einer gesonderten Kontaktabschalteinrichtung zu versehen. Diese kann beispielsweise aus einer pneumatischen Schaltleiste bestehen, deren Komprimierung bei Kontakt mit einer Person ein elektrisches Ausgangssignal zur Folge hat, das die Abschaltung der Absenkbewegung bewirkt.

Nachfolgend wird ein bevorzugtes Ausführungsbeispiel der erfindungsgemäßen Vorrichtung anhand der Zeichnungen näher erläutert. Es zeigen:
- **Fig. 1**: eine mit der erfindungsgemäßen Vorrichtung ausgestattete Hebebühnenplattform beim Einsatz in einem Schlachthof;
- **Fig. 2**: die Hebebühnenplattform gemäß **Fig. 1** in einer Seitenansicht;
- **Fig. 3**: die Hebebühnenplattform gemäß **Fig. 1** in einer Unteransicht.

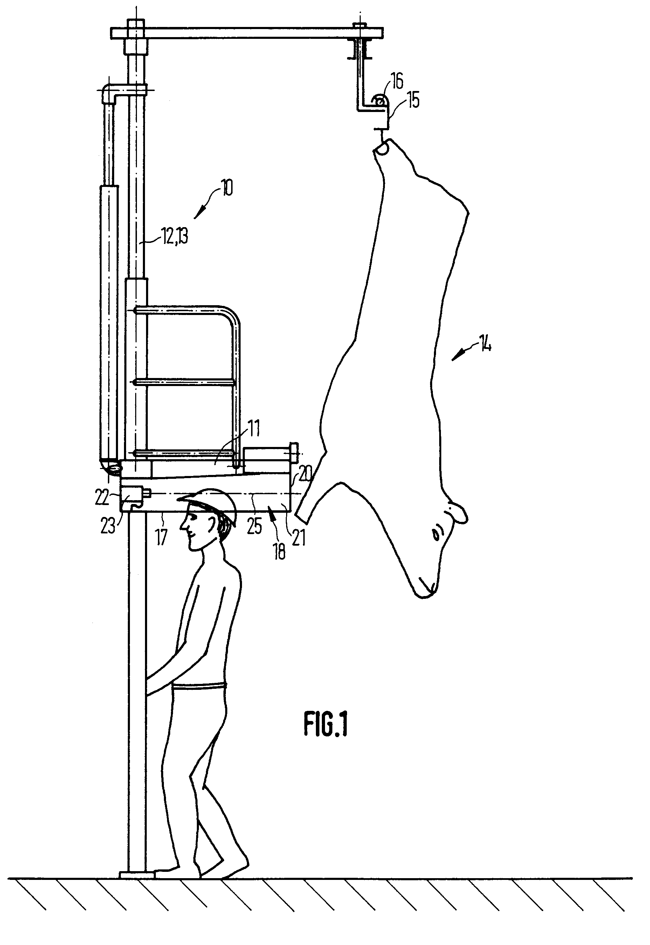

**Fig. 1** zeigt eine Hebebühne 10, wie sie in einem Schlachthof, etwa im Bereich der Organentnahme, Verwendung findet. Die Hebebühne 10 weist eine Hebebühnenplattform 11 auf, die längs zweier Standsäulen 12, 13, angetrieben etwa durch eine hier nicht dargestellte pneumatisch betätigte Kolben-Zylinder-Einheit, auf und ab bewegbar ist, um auf der Hebebühnenplattform 11 befindlichem Schlachthofpersonal den Zugriff auf bestimmte Bereiche eines Schlachttierkörpers 14 zu ermöglichen.

Der in **Fig. 1** dargestellte Schlachttierkörper 14 ist einer von einer Vielzahl von Schlachttierkörpern, die an Haken 15 hängend längs einer Rohrbahn 16 senkrecht zur Zeichnungsebene an der Hebebühnenplattform 11 vorbeigefördert werden.

Unterhalb der Hebebühnenplattform 11 befindet sich längs an deren Unterrand verlaufend eine Stegwandung 17, die einen nach oben hin durch die Hebebühnenplattform 11 geschlossen und nach unten hin offenen Sicherheitsraum 18 begrenzt.

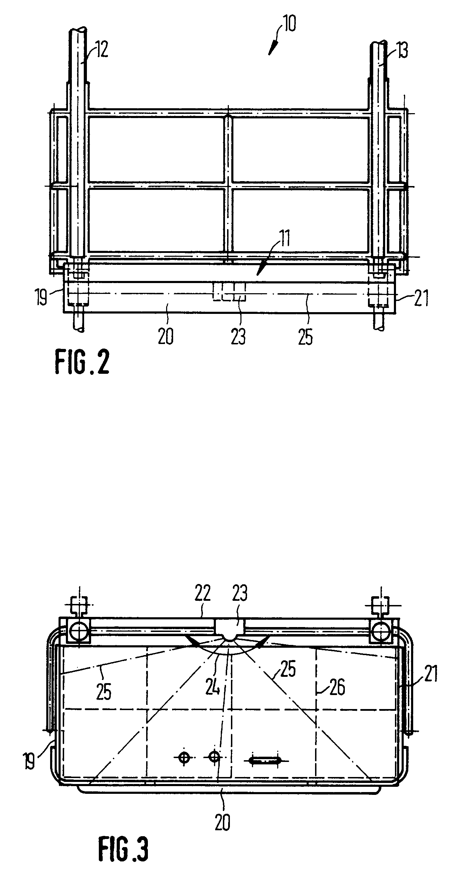

Die **Fig. 2** und **3** zeigen die Hebebühnenplattform 11 mit der darunter befindlichen Stegwandung 17 in einer Seitenansicht und in einer Unteransicht. Aus den **Fig. 2** und **3** ist zu ersehen, daß die Stegwandung 17 längs dem Unterrand der Hebebühnenplattform 11 verlaufend ausgebildet ist und aus einem geschlossenen, vier Seiten 19 bis 22 aufweisenden Rahmen besteht.

Wie der Darstellung in **Fig. 3** zu entnehmen ist, ist innenliegend an der Längsseite 22 der Stegwandung 17 eine Sensoreinrichtung 23 angeordnet. Die Sensoreinrichtung 23 befindet sich damit (s. auch **Fig. 1**) auf der dem Schlachttierkörper 14 abgewandten Längsseite der Stegwandung 17. Die Sensoreinrichtung 23 ist bei dem hier dargestellten Ausführungsbeispiel als Bewegungsmelder ausgeführt, der einen, wie durch den Pfeil 24 angedeutet, um 180° hin und her schwenkenden Taststrahl 25 emittiert. Der Taststrahl 25 ist in **Fig. 3** in verschiedenen Stellungen strichpunktiert dargestellt.

Wie aus **Fig. 2** zu ersehen ist, schwenkt der Taststrahl 25 der Sensoreinrichtung 23 im wesentlichen in einer Horizontalebene um, obwohl auch Neigungen des Taststrahls 25 gegenüber einer Horizontalebene zulässig sind, solange der Strahl nicht über die Stegwandung 17 hinaustreten kann. Die Strahlschwenkebene befindet sich dabei in jedem Fall unterhalb einer in **Fig. 3** dargestellten, die Hebebühnenplattform 11 versteifenden Verrippung 26 oder sonstiger nach unten von der Hebebühnenplattform 11 hervorstehenden Teile. Auf diese Art und Weise ist der Taststrahl 25 bei seinem Schwenkumlauf innerhalb des durch die Stegwandung 17 begrenzten Raumes gegen Störungen abgeschirmt.

Die Funktionsweise der erfindungsgemäßen automatischen Abschaltvorrichtung soll nachfolgend kurz anhand der Darstellung in **Fig. 1** erläutert werden:
Soweit es der Schlachtbetrieb erforderlich macht, kann die Hebebühnenplattform 11 der Hebebühne 10 durch eine hier nicht näher dargestellte pneumatisch betätigte Kolben-Zylinder-Einheit auf und ab bewegt werden. Befindet sich jedoch eine Person, wie in **Fig. 1** dargestellt, unterhalb der Hebebühnenplattform 11, so wird eine Abwärtsbewegung der Hebebühnenplattform 11 in dem Moment abgestoppt, wenn die Person mit einem Körperteil, hier dem Kopf, in den durch die Stegwandung 17 umgrenzten Sicherheitsraum 18 eintritt und in die Ebene der Taststrahlschwenkung eindringt.

Das Eindringen des Kopfes in die Schwenkebene des Taststrahls 25 wird durch die Sensoreinrichtung 23 detektiert, und ein entsprechendes elektrisches Ausgangssignal auf ein magnetgesteuertes Schaltventil der pneumatisch betätigten Kolben-Zylinder-Einheit geschaltet. Hierdurch wird die mittels der Kolben-Zylinder-Einheit durchgeführte Absenkbewegung der Hebebühnenplattform unterbrochen, so daß ein möglicherweise Verletzungen hervorrufender Kontakt zwischen der Hebebühnenplattform 11 und der darunter befindlichen Person vermieden wird.

## Patentansprüche

1. Vorrichtung zur automatischen Bewegungsabschaltung einer bewegten Einrichtung (Bewegungseinrichtung), insbesondere einer auf und ab bewegbaren Plattform einer Hebebühne (10) in einem Schlachthof, mit
- einer unterhalb einer Hebebühnenplattform (11) installierten, vorzugsweise als Bewegungsmelder ausgebildeten berührungslosen Sensoreinrichtung (23);
- einer den Erfassungsbereich der Sensoreinrichtung (23) begrenzenden Abschirmung (17);
wobei die Abschirmung (17) den Erfassungsbereich der Sensoreinrichtung (23) auf einen nach unten offenen Raum (Sicherheitsraum 18) unterhalb der Hebebühnenplattform (11) begrenzt, und die Sensoreinrichtung (23) den Sicherheitsraum (18) mit zumindest einem Taststrahl (25) durchstreift.

2. Vorrichtung nach Anspruch 1,
**dadurch gekennzeichnet,**
daß die Abschirmung durch eine längs dem Umfangsrand der Hebebühnenplattform (11) umlaufende Stegwandung (17) gebildet ist.

3. Vorrichtung nach Anspruch 2,
**dadurch gekennzeichnet,**
daß die Sensoreinrichtung (23) innenliegend an einer Seite (Installationseite 22) der Stegwandung (17) installiert ist.

4. Vorrichtung nach Anspruch 3,
**dadurch gekennzeichnet,**
daß die Installationsseite (22) der Sensoreinrichtung (23) gegenüberliegend derjenigen Stegwandungsseite angeordnet ist, längs derer Schlachttierkörper (14) oder Schlachttierkörperteile vorbeigefördert werden.

5. Vorrichtung nach einem der vorhergehenden Ansprüche,
**dadurch gekennzeichnet,**
daß die Stegwandung (17) nachgiebig ausgebildet ist.

6. Vorrichtung nach einem der vorhergehenden Ansprüche,
**dadurch gekennzeichnet,**
daß die Stegwandung (17) starr ausgebildet und mit einer Kontaktabschalteinrichtung versehen ist.

7. Vorrichtung nach Anspruch 6,
**dadurch gekennzeichnet,**
daß die Kontaktabschalteinrichtung aus einer pneumatischen Schaltleiste gebildet ist.
